# EUROPEAN PATENT SPECIFICATION

(11) **EP 4 152 014 B1**
(45) Date of publication and mention of the grant of the patent: **13.08.2025**
(21) Application number: 22181831.3
(22) Date of filing: 29.06.2022
(51) Int. Cl.: G01R 19/165, G06F 21/75, H03K 19/0175, H03K 19/0185, H03K 19/17768, H03K 19/1778, H03K 19/17784

(54) **CIRCUITS AND METHODS FOR SUPPLY VOLTAGE DETECTION AND TIMING MONITORING**
SCHALTUNGEN UND VERFAHREN ZUR VERSORGUNGSSPANNUNG ERKENNUNG UND TIMING-ÜBERWACHUNG
CIRCUITS ET PROCÉDÉS DE DÉTECTION DE LA TENSION D'ALIMENTATION ET DE SURVEILLANCE DU TEMPS

(30) Priority: 20.09.2021 US 202117479963
(43) Date of publication of application: 22.03.2023
(73) Proprietor: INTEL Corporation, Santa Clara, CA 95054 (US)
(72) Inventor: KHELLAH, Muhammad, Tigard, 97224 (US); TSCHANZ, James, Portland, 97229 (US); KOEBERL, Patrick, 64665 Alsbach-Haenlein (DE); TOKUNAGA, Carlos, Beaverton, 97006 (US); VANGAL, Sriram R., Portland, 97229 (US); PATEL, Pratik, Hillsboro, 97124 (US); BANG, Suyoung, Hillsboro, 97124 (US); BAUTISTA GABRIEL, Miguel Mario, Austin, 78758 (US)
(74) Representative: Viering, Jentschura & Partner mbB Patent- und Rechtsanwälte

(56) References cited:
- EP-A1- 3 901 639
- US-A1- 2020 226 295
- US-A1- 2020 395 849
- US-A1- 2021 242 872

## Description

### FIELD OF THE DISCLOSURE

The present disclosure relates to electronic circuits, and more particularly, to circuits and methods for supply voltage detection and timing monitoring in integrated circuits.

### BACKGROUND

An attacker can attempt voltage tampering of an integrated circuit by manipulating the supply voltage provided to the integrated circuit to levels that are outside normal operating parameters. The manipulated supply voltage may cause circuitry in the integrated circuit to violate timing requirements, for example, causing a timing failure if the logic slow down caused by a reduced supply voltage is more than the reduction in the frequency of a clock signal. If security functions fail in response to the voltage tampering, security logic may be compromised, potentially allowing content to be stolen from a secure region of the integrated circuit. Examples of circuits and methods to detect changes in a voltage value can be found in the patent documents US-2020/395849-A1 and US-2021/242872-A1.

### BRIEF DESCRIPTION OF THE DRAWINGS

Figure 1 illustrates an example of a timing margin monitor (TMM) circuit, according to an embodiment.
Figure 2 illustrates details of an example of the time-to-digital converter (TDC) circuit of Figure (FIG.) 1, according to an embodiment.
Figure 3 is a flow chart that illustrates examples of operations that the TMM circuit of FIG. 1 may perform to monitor the supply voltage, according to an embodiment.
Figure 4 is a state diagram that illustrates the states of a finite state machine (FSM) in the FSM controller circuit of FIG. 1 and the progression between the states, according to an embodiment.
Figure 5 illustrates an example of how the supply voltage can vary relative to upper and lower threshold voltages in the aligned state, according to an embodiment.
Figure 6 illustrates an example of the tunable delay circuit of Figure 1, according to an embodiment.
Figure 7 illustrates an example of a delay cell circuit, according to an embodiment.
Figure 8 illustrates a top down view of an example of a portion of an integrated circuit (IC) die that includes TMM circuits, according to an embodiment.
Figure 9 is a diagram of an illustrative programmable integrated circuit in accordance with an embodiment.

### DETAILED DESCRIPTION

Canary circuits and early versions of tunable replica circuits for voltage-delay monitoring typically present extensive calibration requirements prior to use, require a large number of fuses for tuning, and have challenging manual calibration specifications. These types of sensors may require complex critical-path delay-tuning or a manual alignment across PVT (process, voltage and temperature). Therefore, it would be desirable to provide fully-digital, compact, and intelligent sensors with reduced calibration requirements to enable silicon high-volume manufacturing (HVM). In this regard, this object is achieved by the detection circuit defined in the independent claim 1 and the method defined in the independent claim 7. Further embodiments are defined in the corresponding dependent claims. The description and drawings also present non-claimed embodiments, examples, aspects, and implementations for the better understanding of the claimed embodiments defined in the appended claims.

According to some embodiments, an in-situ self-aligning, timing margin monitor (TMM) sensor circuit provides hardware-based security and timing margin reduction in an integrated circuit. The TMM sensor circuit can be used as a voltage and/or security detection circuit using auto-alignment functionality. The TMM sensor circuit enables continuous supply voltage droop/overshoot monitoring and provides a digital code of the sampled supply voltage every clock cycle, with the ability to track the supply voltage fluctuations in real-time. The TMM sensor circuit allows for threshold-based voltage attack detection, logging and recovery, and provides substantial benefits over existing on-die voltage sensing circuits. The TMM sensor circuit may, for example, be implemented with a small number of logic gate circuits (e.g., less than 750 logic gates), which reduces sensing area overhead. The TMM sensor circuit can be used for distributed sensing for many types of integrated circuits. The TMM sensor circuit can be implemented in both programmable logic and/or non-programmable logic circuitry.

According to some embodiments disclosed herein, a voltage attack in an integrated circuit die can be detected using a timing margin monitor (TMM) circuit that includes a tunable delay circuit, a time-to-digital converter circuit, and a control circuit that operates from the same supply voltage as the logic circuitry being monitored and protected. The tunable delay circuit delays a delayed signal relative to a divided clock signal. The tunable delay circuit receives the supply voltage. The control circuit causes adjustments to a delay provided by the tunable delay circuit to the delayed signal in response to an enable signal. The time-to-digital converter circuit generates a digital code based on the delayed signal that is proportional to the supply voltage in each clock cycle. In an aligned state, the control circuit compares the digital code to upper and lower threshold voltages in each clock cycle, and the results of the comparisons are used to generate droop and overshoot alarm signals. The control circuit asserts the droop alarm signal or the overshoot alarm signal when the supply voltage is outside a range defined by the upper and lower threshold voltages.

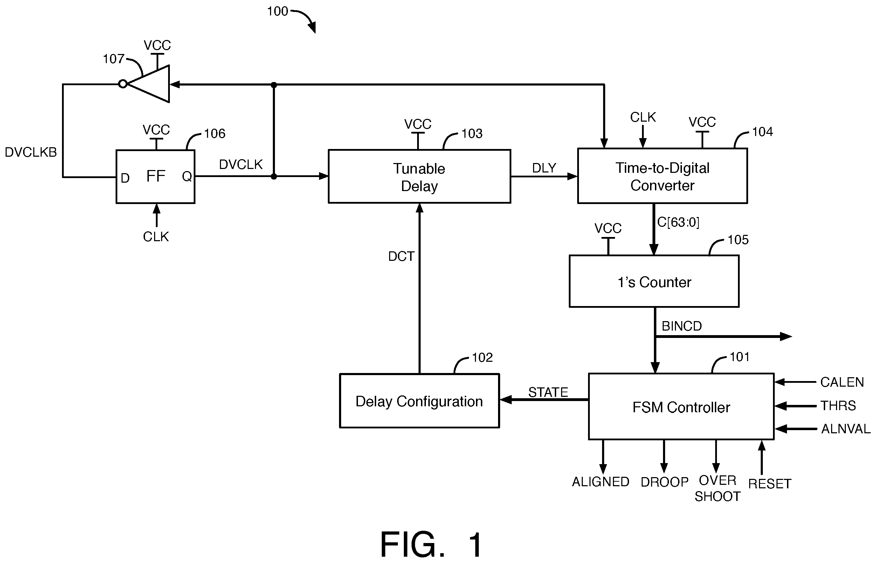

Figure 1 illustrates an example of a timing margin monitor (TMM) circuit 100, according to an embodiment. TMM circuit 100 may also be referred to herein as a voltage detection circuit. As shown in Figure (FIG.) 1, TMM circuit 100 includes finite state machine (FSM) controller circuit 101, delay configuration circuit 102, tunable delay circuit 103, time-to-digital converter (TDC) circuit 104, 1's counter circuit 105, flip-flop circuit 106, and inverter circuit 107. TMM circuit 100 may be formed in any type of integrated circuit (IC) die, such as a programmable logic IC (e.g., a field programmable gate array (FPGA)), a microprocessor IC, a graphics processing unit IC, a memory IC, or an application specific IC (ASIC). TMM circuit 100 can, for example, be synthesized as a system-in-package (SIP) using intrinsic FPGA primitives (e.g., programmable logic circuits) allowing for dynamic creation of on-die distributed sensing networks. The TMM circuit 100 can, for example, include hard intellectual property (IP) blocks, soft IP blocks, or a combination thereof, in an FPGA.

FSM controller circuit 101 and delay configuration circuit 102 function as a delay control circuit that controls the adjustable delay of tunable delay circuit 103, as described in detail below. As shown in FIG. 1, a reset signal RESET, a calibration enable signal CALEN, threshold control signals THRS, and signals ALNVAL are provided to inputs of finite state machine (FSM) controller circuit 101. Signals BINCD generated by 1's counter circuit 105 are provided to additional inputs of FSM controller circuit 101.

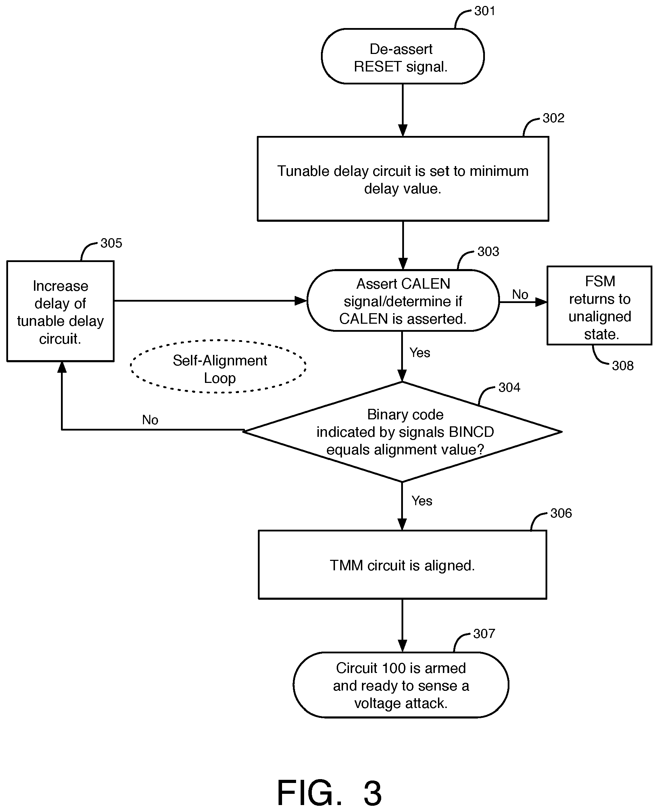

FSM controller circuit 101 generates output signals STATE that indicate the current state of a finite state machine (FSM) in the FSM controller circuit 101. FSM controller circuit 101 adjusts the current state of the FSM based on the input signals provided to FSM controller circuit 101, as described in further detail below with respect to FIGS. 3-4. The STATE signals are provided to inputs of delay configuration circuit 102. Delay configuration circuit 102 generates delay code tuning signals DCT based on the state of the FSM as indicated by the STATE signals. The delay code tuning signals DCT may include one or more signals (bits). Delay configuration circuit 102 may include an encoder that generates encoded delay code tuning signals DCT based on the state indicated by the STATE signals. The encoder may, as specific examples that are not intended to be limiting, encode the delay code tuning signals DCT as a binary code, a thermometer code, a Gray code, or a one-hot code.

The flip-flop (FF) circuit 106 and the inverter 107 are coupled together in a loop to form a clock divide-by-two frequency divider circuit. The output (Q) of FF circuit 106 couples to an input of inverter circuit 107, while an output of inverter circuit 107 couples to an input (D) of FF circuit 106. FF circuit 106 receives a supply voltage VCC. A periodic clock signal CLK is provided to a clock input of flip-flop (FF) circuit 106. Inverter circuit 107 inverts a divided clock signal DVCLK received at its input to generate an inverted divided clock signal DVCLKB at its output. The inverted divided clock signal DVCLKB is provided to the D input of FF circuit 106. FF circuit 106 generates the divided clock signal DVCLK at its Q output by capturing the value of inverted divided clock signal DVCLKB in response to clock signal CLK. The divided clock signal DVCLK has half the frequency of clock signal CLK.

The delay code tuning signals DCT are provided to control inputs of tunable delay circuit 103. The divided clock signal DVCLK is provided to another input of tunable delay circuit 103. Tunable delay circuit 103 is an adjustable delay circuit. Tunable delay circuit 103 generates a delayed periodic (clock) digital output signal DLY by delaying the rising and falling edges in the divided clock signal DVCLK. The delay that the tunable delay circuit 103 provides to the delayed output signal DLY relative to divided clock signal DVCLK is set based on the value of the delay code tuning signals DCT. Tunable delay circuit 103 adjusts the delay provided to delayed signal DLY relative to divided clock signal DVCLK based on changes in the value of the delay code tuning signals DCT. Tunable delay circuit 103 may, for example, include a delay chain of adjustable delay cells that are powered by the supply voltage VCC.

Tunable delay circuit 103 may, for example, be a replica circuit that replicates the delay in some other part of the same integrated circuit (IC). The tunable delay circuit 103 may, for example, replicate the delay in a data path in the IC and be in physical proximity to the data path. According to a more specific example, the data path that is replicated by delay circuit 103 may be the critical timing path in logic circuitry that is being monitored by TMM circuit 100. The logic circuitry, including the data path, receives the same supply voltage VCC as TMM circuit 100. The tunable delay circuit 103 may, for example, replicate the delay in the data path by containing the same types of logic gates coupled in the same order as the data path, or by using different types of logic gates that are selected to replicate the delay of the data path.

As shown in FIG. 1, the delayed signal DLY generated by tunable delay circuit 103 is provided to an input of time-to-digital converter (TDC) circuit 104. The divided clock signal DVCLK generated by FF circuit 106 and the clock signal CLK are provided to additional inputs of TDC circuit 104. TDC circuit 104 converts the delay that is provided by tunable delay circuit 103 to delayed signal DLY relative to divided clock signal DVCLK to a multi-bit digital thermometer output code C[63:0]. TDC circuit 104 changes the value of output code C[63:0] in response to each change that tunable delay circuit 103 makes to the delay of delayed signal DLY relative to divided clock signal DVCLK based on a change in signals DCT. TDC circuit 104 is also coupled to receive supply voltage VCC to monitor any anomalies in supply voltage VCC. Such anomalies may include droop in supply voltage VCC that is caused by a voltage attack. TDC circuit 104 changes the value of the digital thermometer code C[63:0] in proportion to changes in supply voltage VCC. For example, the value of code C[63:0] may decrease in each clock cycle of CLK in response to droop in supply voltage VCC.

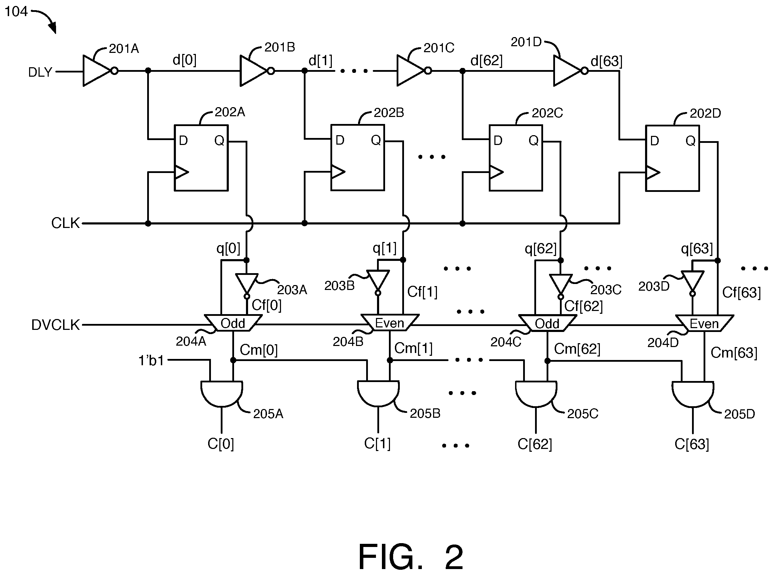

Figure 2 illustrates details of an example of the time-to-digital converter (TDC) circuit 104 of FIG. 1, according to an embodiment. In the embodiment of FIG. 2, TDC circuit 104 includes 64 inverter circuits 201, 64 flip-flop circuits 202, 64 inverter circuits 203, 64 multiplexer circuits 204, and 64 logic AND gate circuits 205. In FIG. 2, inverter circuits 201A-201D, flip-flop circuits 202A-202D, inverter circuits 203A-203D, multiplexer circuits 204A-204D, and logic AND gate circuits 205A-205D are shown as examples. However, TDC circuit 104 may have any number (e.g., 16, 32, 48, 64, 128, etc.) of inverter circuits 201, flip-flop circuits 202, inverter circuits 203, multiplexer circuits 204, and logic AND gate circuits 205. In general, the number of flip-flop circuits 202, inverters 203, and multiplexers 204 is equal (or substantially equal) to the number of inverters 201.

The TDC circuit 104 includes a delay chain formed by the inverter circuits 201 that function as delay cells coupled in series. The input signal to the first inverter circuit 201A in the delay chain is the delayed signal DLY. Each of the inverter circuits 201 is coupled to receive supply voltage VCC. As such, the propagation delay of each inverter circuit 201 directly relates to the supply voltage VCC. As the supply voltage VCC decreases, the propagation delay of inverter circuits 201 increases. As the supply voltage VCC increases, the propagation delay of inverter circuits 201 decreases. The delay cells 201 can be any suitable digital or process-scalable delay cells. While an inverter is a simple form of an inversion delay cell, other circuits such as NAND gates, NOR gates, inverting multiplexers etc. can be configured and used as inversion delay cells. These inversion delay cells can be standard cells from a standard-cell library.

In various embodiments, flip-flop (FF) circuits 202 function as sequential circuits. Any suitable flip-flop design can be used for implementing FF circuits 202. The input D of each flip-flop circuit 202 couples to an output of one of inverter circuits 201. Each flip-flop circuit 202 receives the clock signal CLK at its clock input as a sampling clock signal. CLK has twice the frequency of the frequency divided clock signal DVCLK. One input of each multiplexer circuit 204 is coupled to receive an output signal q at a Q output of one of the FF circuits 202, as shown in FIG. 2. The 64 FF circuits 202 of FIG. 2 generate 64 output signals q[0], q[1], . . . q[62], and q[63]. Flip-flop circuits 202 sample the output signals of respective ones of the inverters 201 at their D inputs on every rising (or every falling) edge of clock signal CLK. For an odd cycle, the high-phase of the divided clock signal DVCLK passes through the delay chain 201, and for an even cycle, the low-phase of the divided clock signal DVCLK passes through the delay chain 201. To generate consistent output codes every cycle of clock signal CLK, regardless of the phase of clock signal DVCLK passed to the delay chain 201, TDC circuit 104 uses polarity inversion of an output code C every other clock cycle. In some embodiments, multiplexer circuits 204 controlled by divided clock signal DVCLK at their select inputs implement polarity inversion of the code C every other clock cycle.

Inverter circuits 203 may be simple inverters or any other digital inversion logic such as NAND gates, NOR gates, etc. configured as inverters. Each of the multiplexer circuits 204 is controllable by clock signal DVCLK at its select input. For example, when DVCLK is high, the signal at the multiplexer 204 data input '1' is provided as output Cm, and when DVCLK is low, the signal at the multiplexer 204 input '0' is provided as output Cm. Each of the multiplexer circuits 204 receives alternating signals at its '0' and 1' inputs from the respective inverter 203 and from the respective flip-flop 202. For example, the first multiplexer 204A receives signal Cf[0] (which is an inversion of signal q[0]) from inverter 203A at its input '0' and signal q[0] (which is logically equivalent to the inversion of Cf[0]) at its input '1'. The second multiplexer circuit 204B receives signal Cf[1] (which is equivalent to signal q[1]) at its input '0' and an inversion of signal q[1] (which is logically equivalent to the inversion of signal Cf[1]) at its input '1'. Clock signal DVCLK causes multiplexers 204 to select signals Cf[63:0] as output signals Cm[63:0] when DVCLK is 0, and the inversions of signals Cf[63:0] as output signals Cm[63:0] when DVCLK is 1. The multiplexers 204 and the inverters 203 cause the output code Cm[63:0] to be a thermometer code.

AND logic gate circuits 205 function as bubble suppression circuitry in TDC circuit 104. The inputs of each AND logic gate circuit 205 receive the output signal Cm of one or two of the multiplexers 204, as shown in FIG. 2. The first AND logic gate circuit 205A receives a hard-wired logic '1' value at its first input and signal Cm[0] at its second input. The second AND logic gate circuit 205B receives signal Cm[0] at its first input and signal Cm[1] at its second input, and so on. As such, any flip-flop metastability-induced bubble in the code Cm[0] through Cm[63], is suppressed by bubble suppression logic gates 205. While AND logic gates 205 are shown in FIG. 2, the AND logic gate circuits 205 can be implemented as NAND logic gates. In the example of FIG. 2, TDC circuit 104 has 64 AND logic gate circuits 205, which is the same number of the delay cells 201. The AND logic gate circuits 205 generate an output thermometer code C[63:0] that is transmitted on parallel signal lines (i.e., a 64-bit code).

TDC circuit 104 has a fast response time of one clock cycle latency by passing a pulse of DVCLK every clock cycle and inverting the polarity of the intermediate code (e.g., Cf[63:0]) every other clock cycle using multiplexers 204 and inverters 203. TDC circuit 104 is accurate by sampling the supply voltage VCC for a full clock cycle, providing improved droop detection resolution. TDC circuit 104 generates code C[63:0] with a 1 clock cycle latency (rather than 2 clock cycles), effectively doubling the throughput of the sensor compared to traditional TDCs that require an implicit reset cycle between consecutive samples.

Referring again to FIG. 1, the output thermometer code C[63:0] generated by TDC circuit 104 is transmitted to inputs of 1's counter circuit 105. 1's counter circuit 105 may be, for example, an adder circuit. 1's counter circuit 105 converts the thermometer code C[63:0] to a binary code BINCD at its outputs. 1's counter circuit 105 causes the binary value of binary code BINCD to equal the number of 1s in thermometer code C[63:0]. The binary code BINCD is provided to inputs of FSM controller circuit 101 and to outputs of TMM circuit 100.

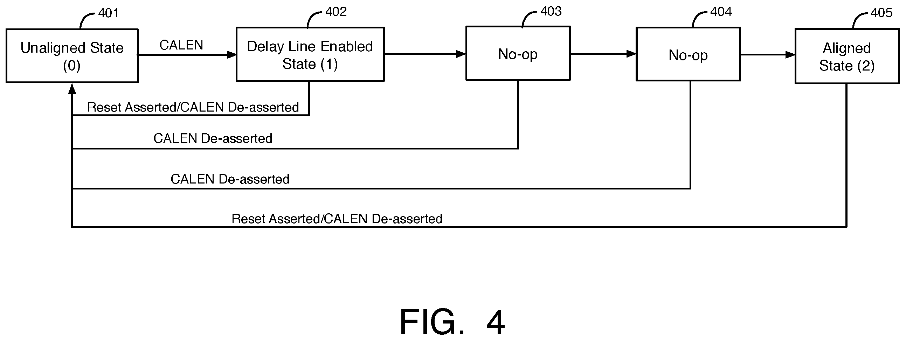

Further details of an example of the operation of the TMM circuit 100 are now discussed in the context of Figures 1, 3, and 4. Timing margin monitor (TMM) circuit 100 detects a change in the supply voltage VCC above an upper threshold voltage or below a lower threshold voltage. The upper and lower threshold voltages are defined by the threshold control signals THRS. Figure 3 is a flow chart that illustrates examples of operations that the TMM circuit 100 may perform to monitor the supply voltage VCC, according to an embodiment. Figure 4 is a state diagram that illustrates the states of a finite state machine (FSM) in the FSM controller circuit 101 and the progression between the states, according to an embodiment.

The supply voltage detection process disclosed herein with respect to FIGS. 3-4 is ideally performed during quiescent conditions of the IC when the supply voltage VCC is stable (e.g., after reset and before workload execution in the IC). Performing supply voltage detection during quiescent conditions ensures that consistent values are determined for the binary code indicated by signals BINCD.

In an exemplary embodiment of TMM circuit 100, circuits 101-102 initially set tunable delay circuit 103 to its minimum delay value and then increase the delay of tunable delay circuit 103. The minimum delay value of tunable delay circuit 103 is the minimum delay that circuit 103 can provide to delayed signal DLY relative to divided clock signal DVCLK.

Referring to FIGS. 1 and 4, the RESET signal is initially asserted, and the CALEN signal is initially de-asserted, causing the FSM controller circuit 101 to be in an unaligned state (0) 401 (shown in FIG. 4) and in reset. In operation 301 shown in FIG. 3, the RESET signal is de-asserted (e.g., transitions to a logic low state). In response to the RESET signal being de-asserted, FSM controller circuit 101 is no longer in reset. In operation 302 shown in FIG. 3, FSM controller circuit 101 and delay configuration circuit 102 set the tunable delay circuit 103 to its minimum delay value. TDC circuit 104 may, for example, generate all 1s in thermometer code C[63:0] in response to the minimum delay value of tunable delay circuit 103. Also, FSM controller circuit 101 receives the threshold control signals THRS that indicate the values of the upper and lower threshold voltages, and FSM controller circuit 101 receives ALNVAL signals. Signals ALNVAL indicate an alignment value for the binary code indicated by signals BINCD. The ALNVAL signals may, for example, be provided as an N-bit binary code. The alignment value indicated by signals ALNVAL may equal any of the possible values of the BINCD signals. The threshold control signals THRS may, for example, be generated based on user input or retrieved from storage.

In operation 303 shown in FIG. 3, the CALEN signal is asserted (e.g., transitions to a logic high state). In response to the CALEN signal being asserted, the FSM controller circuit 101 transitions from the unaligned state 401 to the delay line enabled state (1) 402, as shown in FIG. 4. In operation 303, the FSM controller circuit 101 adjusts the value of the STATE signals to indicate to delay configuration circuit 102 that the FSM is in the delay line enabled state 402. In the delay line enabled state 402, FSM controller circuit 101 and delay configuration circuit 102 perform a self-alignment loop to calibrate the delay of tunable delay circuit 103, as shown in FIG. 3.

In decision operation 304 shown in FIG. 3, FSM controller circuit 101 determines if the binary code indicated by signals BINCD equals the alignment value indicated by signals ALNVAL. As an example, FSM controller circuit 101 may include a comparator circuit that compares the binary code indicated by signals BINCD to the alignment value indicated by signals ALNVAL to determine if these two values are equal in operation 304. If FSM controller circuit 101 determines that the binary code indicated by signals BINCD does not equal the alignment value indicated by signals ALNVAL in decision operation 304, FSM controller circuit 101 and delay configuration circuit 102 increase the delay that the tunable delay circuit 103 provides to signal DLY relative to divided clock signal DVCLK, in operation 305 shown in FIG. 3. As an example, the delay configuration circuit 102 may adjust the value of the delay code tuning signals DCT in operation 305 in response to the STATE signals indicating that the finite state machine (FSM) is in the delay line enabled state 402. In response to the adjustment in the value of the delay code tuning signals DCT provided by delay configuration circuit 102 in operation 305, tunable delay circuit 103 increases the delay provided to signal DLY relative to clock signal DVCLK. As a more specific example, the delay configuration circuit 102 may contain a counter circuit that increases a count value in operation 305 in response to the STATE signals indicating that the FSM is in the delay line enabled state 402. In this example, the delay configuration circuit 102 may provide the count value in the delay code tuning signals DCT.

During the self-alignment loop of FIG. 3, the FSM controller circuit 101 continuously, or at intervals, determines if the CALEN signal is still asserted in operation 303. If the CALEN signal is de-asserted, or if the RESET signal is asserted, during the self-alignment loop, the FSM in FSM controller circuit 101 returns to the unaligned state 401 in operation 308, and the self-alignment loop terminates.

Also, during the self-alignment loop, the FSM controller circuit 101 continuously, or at intervals, determines in decision operation 304 if the binary code indicated by signals BINCD equals the alignment value indicated by signals ALNVAL. As long as the binary code indicated by signals BINCD does not equal the alignment value indicated by signals ALNVAL, the FSM in FSM controller circuit 101 remains in state 402, and the delay configuration circuit 102 continues to increase the delay that the tunable delay circuit 103 provides to signal DLY relative to divided clock signal DVCLK in additional iterations of operation 305.

In response to each increase that tunable delay circuit 103 provides to the delay of signal DLY relative to divided clock signal DVCLK, TDC circuit 104 decreases the number of 1s in thermometer code C[63:0], and 1's counter circuit 105 decreases the binary value of signals BINCD. As the delay provided to signal DLY increases, the period of clock signal CLK remains constant, if there are no changes in the supply voltage VCC and the temperature of the IC. After FSM controller circuit 101 has detected that the binary value of signals BINCD equals the alignment value indicated by signals ALNVAL in operation 304, FSM controller circuit 101 and delay configuration circuit 102 maintain the value of the delay code tuning signals DCT constant. In response to the value of signals DCT being constant, tunable delay circuit 103 causes the delay provided to signal DLY to remain constant. In response to the delay provided to signal DLY remaining constant, TDC 104 and 1's counter circuit 105 cause the binary value of signals BINCD to remain constant.

In response to FSM controller circuit 101 determining that the binary value indicated by signals BINCD equals the alignment value indicated by signals ALNVAL, FSM controller circuit 101 transitions from the delay line enabled state 402 to the aligned state 405. During the transition to the aligned state 405, FSM controller circuit 101 performs 2 NO-OPs (no operations) 403-404 as a filter for any combinational glitches from tunable delay circuit 103 and to prevent any false positives in the circuitry of FIG. 1 after the self-alignment loop. After the tunable delay circuit 103 has settled after the 2 NO-OPs 403-404, FSM controller circuit 101 enters the aligned state 405 in operation 306 indicating that TMM circuit 100 is aligned, and FSM controller circuit 101 asserts an ALIGNED output signal indicating the alignment of TMM circuit 100, as shown in FIG. 1. In the aligned state 405, FSM controller circuit 101 outputs a value in the STATE signals that indicates that TMM circuit 100 is ready for use.

TMM circuit 100 returns to the unaligned state 401 in response to the CALEN signal being de-asserted or the RESET signal being asserted, as shown in FIG. 4. If PVT (process, voltage and temperature) conditions change in the IC (e.g. supply voltage VCC changes), the FSM controller circuit 101 and TDC circuit 104 quickly re-align to a new supply voltage VCC by toggling the CALEN signal, and voltage fluctuations around the new supply voltage VCC are monitored. The minimum and maximum threshold voltages indicated by threshold control signals THRS can be adjusted accordingly.

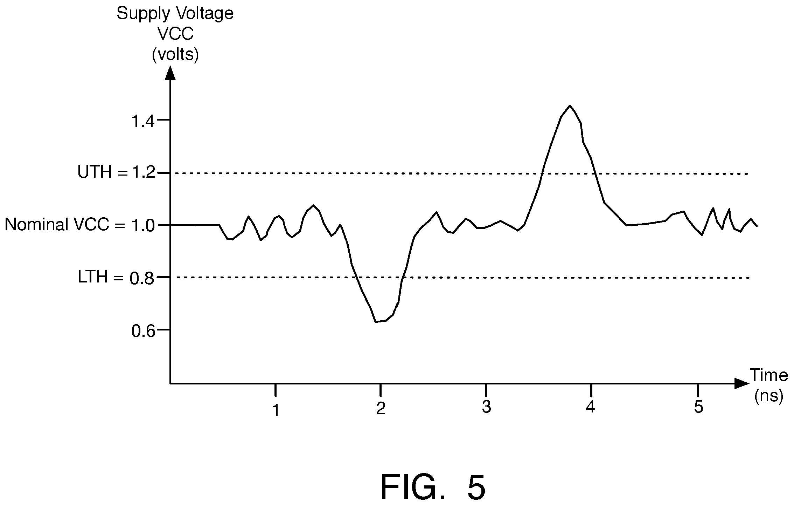

In the aligned state 405, TMM circuit 100 can detect variations in the supply voltage VCC that are outside a voltage range defined by threshold control signals THRS. TMM circuit 100 can detect an overshoot in the supply voltage VCC and an undershoot in the supply voltage VCC in the aligned state 405. The threshold control signals THRS provided to FSM controller circuit 101 indicate an upper threshold voltage UTH and a lower threshold voltage LTH that define the voltage range. The upper threshold voltage UTH corresponds to a binary value that is greater than the alignment value indicated by signals ALNVAL. The lower threshold voltage LTH corresponds to a binary value that is less than the alignment value ALNVAL. In the aligned state 405, one or more comparator circuits in FSM controller circuit 101 compare the binary code indicated by signals BINCD to the binary values of the upper threshold voltage UTH and the lower threshold voltage LTH indicated by control signals THRS. In the aligned state 405, FSM controller circuit 101 asserts an OVERSHOOT signal in response to supply voltage VCC (as indicated by signals BINCD) increasing above the upper threshold voltage UTH. In the aligned state 405, FSM controller circuit 101 asserts a DROOP signal in response to supply voltage VCC (as indicated by signals BINCD) decreasing below the lower threshold voltage LTH. Figure 5 illustrates an example of how the supply voltage VCC can vary relative to the upper threshold voltage UTH and the lower threshold voltage LTH in the aligned state 405, according to an embodiment. In the example of FIG. 5, the upper threshold voltage UTH is 1.2 volts, the nominal supply voltage VCC is 1.0 volts, and the lower threshold voltage LTH is 0.8 volts. Time is shown in nanoseconds (ns).

When the supply voltage VCC moves outside the voltage range defined by the upper and lower threshold voltages UTH and LTH, the delay of tunable delay circuit 103 has increased or decreased by an amount sufficient to exceed a timing margin. When TMM circuit 100 is operating in the aligned state 405, the change in the binary value of signals BINCD that is caused by VCC moving outside the voltage range functions as an alarm that indicates to FSM controller circuit 101 (and possibly other circuitry in the IC) that a voltage attack on the supply voltage VCC may have occurred in the IC. In an embodiment, TMM circuit 100 may generate the alarm in the OVERSHOOT signal or in the DROOP signal quickly, for example, within 1 clock cycle (of CLK) of the timing margin being exceeded. The binary code indicated by signals BINCD indicates the extent of the timing violation (or available slack) for margin recovery.

The digital code indicated by the delay code tuning signals DCT at the alignment value is dependent on the process, the voltage, and the temperature (PVT) of the IC. For this reason, the digital code indicated by the delay code tuning signals DCT at the alignment value is a valuable reference point for security uses, such as power optimization and energy recovery using dynamic voltage-frequency scaling. When a TMM circuit 100 is embedded inside an integrated circuit (IC) die, the tunable delay circuit 103 tracks the PVT conditions of the IC during operation of the IC. Transient voltage and temperature changes in the IC, if any, may be indicated by changes in the delay of tunable delay circuit 103. Multiple instances of TMM circuit 100 can be created to implement a network of compact voltage sensors in an IC to diagnose the conditions of the supply voltage power grid in the IC, to indicate voltage faults in the IC, and to flag voltage attacks on the IC for making the IC more secure. TMM circuit 100 can also be used to maximize the supply voltage VCC, for dynamic timing margin and energy reduction, and to improve silicon energy efficiency in a dynamic, workload dependent manner. In some embodiments, the delay code tuning signals DCT can be used to sort integrated circuit dies after fabrication based on their speed using frequency driven silicon binning.

The self-alignment loop in operations 303-305 enables a compact, low-power TMM sensor circuit 100 that has a short TDC chain (e.g. 16-bit or 64-bit TDC circuit) and that saves valuable clock power compared to previously known TDC designs. TMM 100 eliminates the need to overprovision the TDC with bits that are unneeded for the self-alignment loop. The self-alignment loop allows the TDC 104 to monitor transitions around the alignment value that are useful for a variety of purposes, such as supply voltage detection and timing monitoring.

According to some embodiments, processing circuitry can process the data indicated by the binary code BINCD in real-time using pattern recognition with signal template matching to identify patterns in the data that indicate anomalies in the supply voltage on a power grid in the integrated circuit. The processing circuitry can attempt to pattern match the data indicated by code BINCD with known signal templates to determine if the supply voltage contains any anomalies.

According to other embodiments, the time-to-digital converter (TDC) circuit 104 partitions the digital code C[63:0] into multiple segments (e.g., 4 code segments each having 16-bits). The FSM controller circuit 101 and the delay configuration circuit 102 can align any of the segments of the digital code C[63:0] to the alignment value indicated by signals ALNVAL.

In addition to being used for hardware security, the TMM circuit 100 can also be used for timing margin detection. After auto-alignment and calibration of TMM circuit 100, fluctuations in the output digital code BINCD are PVT dependent and provide a reference point for security uses, power optimization, timing margin detection, and energy recovery using dynamic voltage-frequency scaling (DVFS) and silicon binning. When a distributed sensing network of TMM circuits 100 is embedded inside an integrated circuit (IC), the tunable delay circuit 103 tracks PVT conditions in the IC during operation. Transient voltage and temperature changes, if any, are reflected in the output signal DLY of tunable delay circuit 103 and in signals BINCD. The resulting magnitude of signals BINCD indicate if there are positive or negative supply voltage or timing margin changes and serves as an indicator of the extent of a timing violation (or available slack) for timing margin recovery related to clock signal DVCLK. After alignment to a clock edge, the code indicated by signals BINCD is indicative of the timing of the leading and trailing edges of the divided clock signal DVCLK and can be used for closed-loop power and timing management (e.g., using an on-board or on-die power management unit) for the detection of supply voltage and timing margin changes.

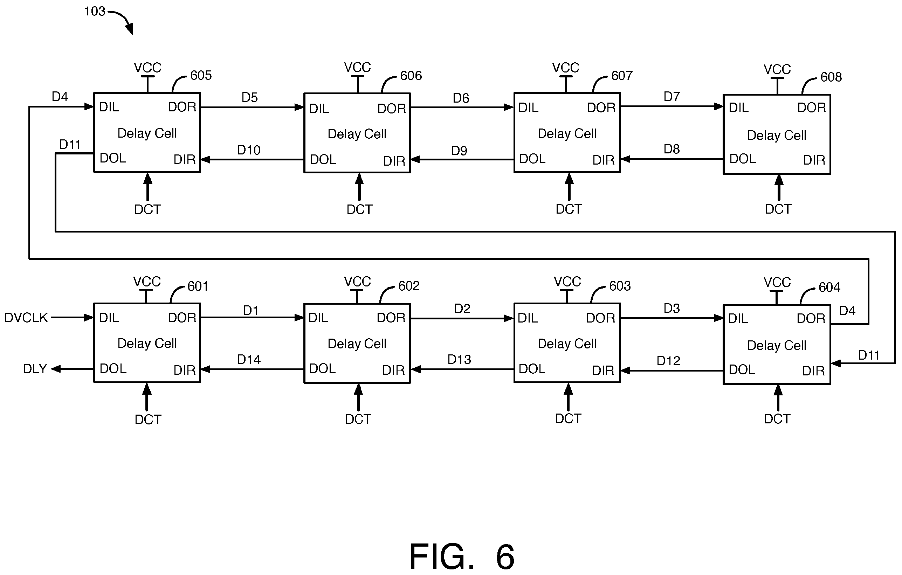

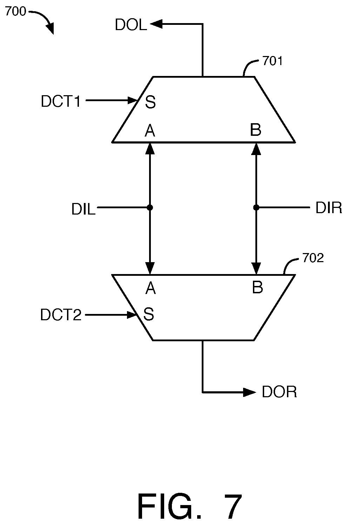

A detailed example of the tunable delay circuit 103 in TMM circuit 100 is disclosed herein with respect to Figures 6 and 7. The exemplary tunable delay circuit 103 shown in FIGS. 6-7 is provided for illustrative purposes and is not intended to be limiting. Many other types of adjustable delay circuits may be used to implement the tunable delay circuit 103 of Figure 1.

Figure 6 illustrates an example of the tunable delay circuit 103 of Figure 1, according to an embodiment. In the exemplary embodiment of FIG. 6, tunable delay circuit 103 is an adjustable replica delay chain circuit. The tunable delay circuit 103 of FIG. 6 is a symmetric and linearized delay circuit that includes a bi-directional, folded, telescopic delay chain of adjustable delay cell circuits. In the embodiment of FIG. 6, tunable delay circuit 103 includes 8 delay cell circuits 601-608 coupled in a folded, bidirectional delay chain configuration. Although 8 delay cell circuits 601-608 are shown in the example of FIG. 6, it should be understood that tunable delay circuit 103 of FIG. 1 can have any number of delay cell circuits needed to match any specific latency requirements.

As another specific example, tunable delay circuit 103 may have 53 delay cell circuits that are coupled in a bidirectional, folded delay chain, as with the embodiment of FIG. 6. In some embodiments, the delay cell circuits 601-608 are fully synthesizable and can be built using native standard library cells on any process node. A faster delay cell circuit allows for a finer resolution in capturing voltage changes. Each of the delay cell circuits in tunable delay circuit 103 receives the same supply voltage VCC, as shown in FIG. 6.

In the embodiment of FIG. 6, the divided clock signal DVCLK is provided to an input of delay cell circuit 601, and the delayed output signal DLY is generated at an output of delay cell circuit 601. Each of the delay cell circuits 601-608 has a data-forward circuit and a data-return circuit that are controlled by the delay code tuning signals DCT generated by the delay configuration circuit 102 of FIG. 1. One or more of the data-forward circuits in the delay cell circuits 601-608 propagate the rising and falling edges received in the DVCLK signal along a first delay path through the delay chain. One or more of the data-return circuits in the delay cell circuits 601-608 propagate the rising and falling edges received from the last data-forward circuit coupled in the delay chain along a second delay path through the delay chain to the output in signal DLY.

The digital code of the delay code tuning signals DCT determines how many of the delay cell circuits 601-608 are coupled in the delay chain that propagates rising and falling edges received from clock signal DVCLK to the output in signal DLY. The delay configuration circuit 102 adjusts the value of the delay code tuning signals DCT to couple more or less of the delay cell circuits 601-608 into the delay chain that couples the input at clock signal DVCLK to the output at signal DLY. For example, an increase in the value of the delay code tuning signals DCT may cause delay circuit 103 to couple more of delay cell circuits 601-608 into the delay chain, increasing the delay provided to signal DLY relative to clock signal DVCLK. As another example, a decrease in the value of the delay code tuning signals DCT may cause delay circuit 103 to couple fewer of the delay cell circuits 601-608 into the delay chain, decreasing the delay provided to signal DLY relative to clock signal DVCLK.

The value of the delay code tuning signals DCT determines the last delay cell circuit coupled in the delay chain. The last delay cell circuit coupled in the delay chain passes the delayed signal in the first delay path to the second delay path through its data-forward and data-return circuits, decoupling subsequent delay cell circuits from the delay chain, as discussed in further detail below.

The tunable delay circuit 103 of FIG. 6 has 8 possible delay settings that are configured by the delay code tuning signals DCT. When signals DCT configure tunable delay circuit 103 to have the minimum delay setting, delay cell circuit 601 is the only delay cell circuit coupled in the delay chain, and transitions in clock signal DVCLK propagate through the data-forward and data-return circuits in delay cell circuit 601 back to the output as delayed signal DLY without passing through any of the other delay cell circuits 602-608.

When signals DCT configure tunable delay circuit 103 to have the second smallest delay setting, delay cell circuits 601 and 602 are the only delay cell circuits coupled in the delay chain. With the second smallest delay setting, transitions in clock signal DVCLK propagate through the data-forward circuit in delay cell circuit 601, then to delay cell circuit 602 as signal D1, then through the data-forward and data-return circuits in delay cell circuit 602, then back to delay cell circuit 601 as signal D14, and then through the data-return circuit in delay cell circuit 601 to the output as signal DLY.

When signals DCT configure tunable delay circuit 103 to have the third smallest delay setting, delay cell circuits 601-603 are the only delay cell circuits coupled in the delay chain. With the third smallest delay setting, transitions in clock signal DVCLK propagate through the data-forward circuit in delay cell circuit 601, then to delay cell circuit 602 as signal D1, then through the data-forward circuit in delay cell circuit 602, then to delay cell circuit 603 as signal D2, then through the data-forward and data-return circuits in delay cell circuit 603, then back to delay cell circuit 602 as signal D13, then through the data-return circuit in delay cell circuit 602, then back to delay cell circuit 601 as signal D14, and finally through the data-return circuit in delay cell circuit 601 to the output as signal DLY.

When signals DCT configure tunable delay circuit 103 to have the maximum delay setting, all 8 of the delay cell circuits 601-608 are coupled in the delay chain. With the maximum delay setting, transitions in clock signal DVCLK propagate through the data-forward circuits in delay cell circuits 601-607 to signal D7, passing between the delay cell circuits as signals D1-D7 along the first delay path, as shown in FIG. 6. The transitions in signal D7 then propagate through the data-forward and data-return circuits in delay cell circuit 608 to signal D8. The transitions in signal D8 then propagate back through the data-return circuits in delay cell circuits 607, 606, 605, 604, 603, 602, and 601 to delayed signal DLY, passing between the delay cell circuits as signals D8-D14 along the second delay path, as shown in FIG. 6.

Figure 7 illustrates an example of a delay cell circuit 700, according to an embodiment. Delay cell circuit 700 of FIG. 7 is an example of each of the delay cell circuits 601-608 in the tunable delay circuit 103 of FIG. 6. Delay cell circuit 700 includes two 2-to-1 multiplexer circuits 701 and 702. The A data input of each of the multiplexer circuits 701-702 is coupled to the left input DIL of delay cell circuit 700. The B data input of each of the multiplexer circuits 701-702 is coupled to the right input DIR of the delay cell circuit 700. The output of multiplexer circuit 701 is coupled to the left output DOL of the delay cell circuit 700. The output of multiplexer circuit 702 is coupled to the right output DOR of the delay cell circuit 700. The inputs DIL and DIR and the outputs DOR and DOL of each of the delay cell circuits 601-608 shown in FIG. 6 correspond to the DIL and DIR inputs and the DOR and DOL outputs of delay cell circuit 700, respectively. The select input S of multiplexer circuit 701 is coupled to receive a first one DCT1 of the delay code tuning signals DCT. The select input S of multiplexer circuit 702 is coupled to receive a second one DCT2 of the delay code tuning signals DCT.

In order to configure the delay cell circuit 700 to be the last delay cell circuit coupled in the delay chain, the delay code tuning signal DCT1 is set to a logic state that causes multiplexer circuit 701 to pass the signal transitions received at input DIL to output DOL. For example, as described above, delay cell circuit 608 is the last delay cell circuit coupled in the delay chain when tunable delay circuit 103 has the maximum delay setting, and delay cell circuit 601 is the last delay cell circuit coupled in the delay chain when tunable delay circuit 103 has the minimum delay setting.

In order to configure the delay cell circuit 700 to be one of the delay cell circuits coupled in the delay chain other than the last delay cell circuit coupled in the delay chain, the delay code tuning signal DCT2 is set to a logic state that causes multiplexer 702 to pass the signal transitions received at input DIL to output DOR, and the delay code tuning signal DCT1 is set to a logic state that causes multiplexer 701 to pass the signal transitions received at input DIR to output DOL. When delay cell circuit 700 is in this configuration, multiplexer 702 is the data-forward circuit, and multiplexer 701 is the data-return circuit. Thus, delay cell circuit 700 is configurable to implement each of the delay cell circuits 601-608 of FIG. 6 for each of the 8 configurable delay settings of tunable delay circuit 103.

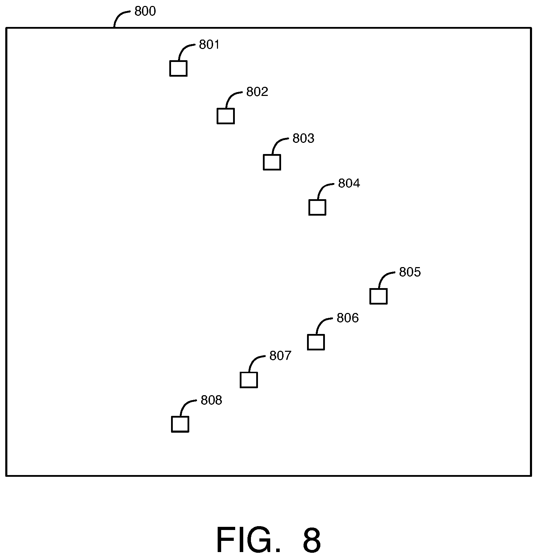

Figure 8 illustrates a top down view of an example of a portion 800 of an integrated circuit (IC) die that includes TMM circuits, according to an embodiment. Portion 800 of the IC die includes 8 TMM circuits 801-808 in the example of FIG. 8. In other embodiments, an IC die may have any number of TMM circuits. TMM circuit 100 of FIG. 1 is an example of each of the 8 TMM circuits 801-808. TMM circuits 801-808 detect voltage attacks on one or more supply voltages in the IC and indicate the occurrence of a voltage attack in the OVERSHOOT and DROOP signals as described above with respect to FIGS. 1-7, before the voltage attack leads to a timing failure that may compromise security functions in the IC die. TMM circuits 801-808 may also detect changes in the supply voltage that occur for other reasons and changes in the temperature of the IC die.

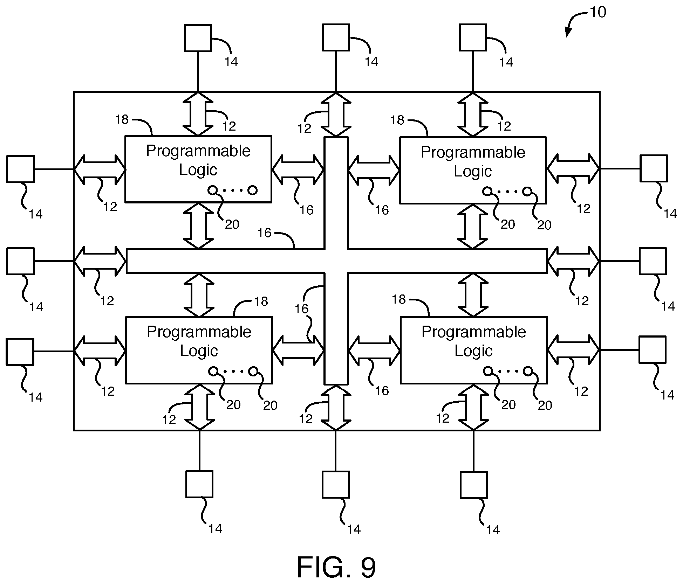

An illustrative programmable logic integrated circuit (IC) 10 that may include one or more TMM circuits 100 is shown in Figure 9. As shown in FIG. 9, programmable logic integrated circuit 10 may have input-output circuitry 12 for driving signals off of IC 10 and for receiving signals from other devices via input-output pads 14. Interconnection resources 16 such as global, regional, and local vertical and horizontal conductive lines and buses may be used to route signals on IC 10. Interconnection resources 16 include fixed interconnects (conductive lines) and programmable interconnects (i.e., programmable connections between respective fixed interconnects). Programmable logic circuitry 18 may include combinational and sequential logic circuitry. The programmable logic 18 may be configured to perform custom logic functions.

Programmable logic IC 10 contains memory elements 20 that can be loaded with configuration data (also called programming data) using pads 14 and input-output circuitry 12. Once loaded, the memory elements 20 may each provide a corresponding static control output signal that controls the state of an associated logic component in programmable logic 18. Typically, the memory element output signals are used to control the gates of metal-oxide-semiconductor (MOS) transistors. In the context of programmable integrated circuits, the memory elements 20 store configuration data and are sometimes referred to as configuration random-access memory (CRAM) cells.

## Claims

1. A detection circuit (100) comprising:
a tunable delay circuit (103) configured to generate a delayed signal (DLY) in response to an input signal, wherein the tunable delay circuit is configured to receive a supply voltage (VCC);
a control circuit (101, 102) configured to adjust a delay provided by the tunable delay circuit to the delayed signal relative to the input signal; and
a time-to-digital converter circuit (104) configured to convert the delay provided by the tunable delay circuit to the delayed signal to a digital code,
wherein the time-to-digital converter circuit (104) is also configured to receive the supply voltage (VCC),
wherein the time-to-digital converter circuit (104) is configured to change the value of the digital code in proportion to changes in the supply voltage (VCC),
wherein the control circuit is configured to cause the tunable delay circuit to maintain its delay setting constant in response to a value of the digital code reaching an alignment value (ALNVAL), and
wherein the control circuit is configured to detect changes in the supply voltage, while the delay setting of the tunable delay circuit is maintained constant, based on changes in the digital code.

2. The detection circuit (100) of claim 1, wherein the control circuit (101, 102) further comprises:
a finite state machine controller circuit (101) configured to provide a control output indicative of a state of a finite state machine in response to the digital code;
a delay configuration circuit (102) configured to cause the tunable delay circuit (103) to adjust the delay provided to the delayed signal in response to the control output indicating a first state of the finite state machine,
wherein the delay configuration circuit is configured to cause the tunable delay circuit to maintain its delay setting constant in response to the control output indicating a second state of the finite state machine, and wherein the finite state machine is configured to enter the second state in response to the digital code reaching the alignment value (ALNVAL).

3. The detection circuit (100) of any one of claims 1-2, wherein the control circuit (101, 102) is configured to generate a droop signal (DROOP) indicating that the supply voltage (VCC) has decreased below a first threshold voltage in response to a decrease in the digital code below a first threshold value, and wherein the control circuit is configured to generate an overshoot (OVERSHOOT) signal indicating that the supply voltage has increased above a second threshold voltage in response to an increase in the digital code above a second threshold value.

4. The detection circuit (100) of any one of claims 1-3 further comprising:
a frequency divider circuit (106) configured to generate a frequency divided clock signal (DVCLK) in response to an input clock signal, wherein the frequency divider circuit is configured to provide the frequency divided clock signal to an input of the tunable delay circuit (103) as the input signal.

5. The detection circuit (100) of any one of claims 1-4 further comprising:
a counter circuit (105) configured to generate a binary code (BINCD) indicative of a number of ones in the digital code, wherein the control circuit (101, 102) is configured to compare the binary code to the alignment value using a comparator, and wherein the control circuit is configured to cause the tunable delay circuit (103) to maintain its delay setting constant in response to the binary code reaching the alignment value (ALNVAL).

6. The detection circuit (100) of any one of claims 1-5, wherein the tunable delay circuit (103) comprises a bi-directional, folded delay chain comprising adjustable delay cell circuits (700), and wherein each of the adjustable delay cell circuits comprises a data-forward circuit coupled between a first input and a first output of the adjustable delay cell circuit and a data-return circuit coupled between a second input and a second output of the adjustable delay cell circuit.

7. A method for monitoring a supply voltage (VCC) in an integrated circuit, wherein the method comprises:
generating a delayed signal (DLY) using a tunable delay circuit (103), wherein the tunable delay circuit receives the supply voltage;
adjusting a delay provided by the tunable delay circuit to the delayed signal using a control circuit (101, 102);
converting the delay provided by the tunable delay circuit to the delayed signal to a digital code using a time-to-digital converter circuit (104), wherein the time-to-digital converter circuit (104) also receives the supply voltage (VCC), and wherein the time-to-digital converter circuit (104) changes the value of the digital code in proportion to changes in the supply voltage (VCC);
causing the tunable delay circuit to maintain its delay setting constant in response to a value of the digital code reaching an alignment value (ALNVAL); and
detecting changes in the supply voltage, while maintaining said delay setting of the tunable delay circuit constant, based on changes in the digital code.

8. The method of claim 7 further comprising:
generating an overshoot signal (OVERSHOOT) indicating that the supply voltage (VCC) has increased above an upper threshold voltage in response to an increase in the digital code above an upper threshold value using the control circuit (101, 102); and
generating a droop signal (DROOP) indicating that the supply voltage has decreased below a lower threshold voltage in response to a decrease in the digital code below a lower threshold value using the control circuit.

9. The method of any one of claims 7-8 further comprising:
processing data indicated by the digital code in real-time using pattern recognition with signal template matching to identify patterns in the data that indicate anomalies in the supply voltage on a power grid in the integrated circuit.

10. The method of any one of claims 7-9 further comprising:
converting the digital code from a thermometer code to a binary code (BINCD) using a counter circuit (105); and
comparing the binary code to the alignment value (ALNVAL) using the control circuit (101, 102), wherein causing the tunable delay circuit (103) to maintain its delay setting constant further comprises causing the tunable delay circuit to maintain its delay setting constant in response to the binary code reaching the alignment value.

11. The method of any one of claims 7-10 further comprising:
generating a frequency divided clock signal (DVCLK) in response to an input clock signal using a frequency divider circuit (106); and
providing the frequency divided clock signal to an input of the tunable delay circuit (103), wherein generating the delayed signal (DLY) using the tunable delay circuit comprises delaying pulses in the frequency divided clock signal to generate the delayed signal using the tunable delay circuit.

## Patentansprüche

1. Detektionsschaltung (100), umfassend:
eine abstimmbare Verzögerungsschaltung (103), die dazu ausgelegt ist, ein verzögertes Signal (DLY) in Reaktion auf ein Eingangssignal zu erzeugen, wobei die abstimmbare Verzögerungsschaltung dazu ausgelegt ist, eine Versorgungsspannung (VCC) zu empfangen;
eine Steuerschaltung (101, 102), die dazu ausgelegt ist, eine Verzögerung, die durch die abstimmbare Verzögerungsschaltung dem verzögerten Signal bereitgestellt wird, relativ zu dem Eingangssignal anzupassen; und
eine Zeit-Digital-Wandlerschaltung (104), die dazu ausgelegt ist, die durch die abstimmbare Verzögerungsschaltung dem verzögerten Signal bereitgestellte Verzögerung in einen digitalen Code umzuwandeln,
wobei die Zeit-Digital-Wandlerschaltung (104) auch dazu ausgelegt ist, die Versorgungsspannung (VCC) zu empfangen,
wobei die Zeit-Digital-Wandlerschaltung (104) dazu ausgelegt ist, den Wert des digitalen Codes proportional zu Änderungen der Versorgungsspannung (VCC) zu ändern, wobei die Steuerschaltung dazu ausgelegt ist, die abstimmbare Verzögerungsschaltung in Reaktion darauf, dass ein Wert des digitalen Codes einen Ausrichtungswert (ALNVAL) erreicht, zu veranlassen, ihre Verzögerungseinstellung konstant zu halten, und
wobei die Steuerschaltung dazu ausgelegt ist, Änderungen der Versorgungsspannung, während die Verzögerungseinstellung der abstimmbaren Verzögerungsschaltung konstant gehalten wird, basierend auf Änderungen des digitalen Codes zu detektieren.

2. Detektionsschaltung (100) nach Anspruch 1, wobei die Steuerschaltung (101, 102) ferner Folgendes umfasst:
eine Steuerschaltung (101) für eine endliche Zustandsmaschine, die dazu ausgelegt ist, in Reaktion auf den digitalen Code eine Steuerausgabe bereitzustellen, die einen Zustand einer endlichen Zustandsmaschine anzeigt;
eine Verzögerungskonfigurationsschaltung (102), die dazu ausgelegt ist, die abstimmbare Verzögerungsschaltung (103) in Reaktion darauf, dass die Steuerausgabe einen ersten Zustand der endlichen Zustandsmaschine anzeigt, zu veranlassen, die dem verzögerten Signal bereitgestellte Verzögerung anzupassen,
wobei die Verzögerungskonfigurationsschaltung dazu ausgelegt ist, die abstimmbare Verzögerungsschaltung in Reaktion darauf, dass die Steuerausgabe einen zweiten Zustand der endlichen Zustandsmaschine anzeigt, zu veranlassen, ihre Verzögerungseinstellung konstant zu halten, und wobei die endliche Zustandsmaschine dazu ausgelegt ist, in Reaktion darauf, dass der digitale Code den Ausrichtungswert (ALNVAL) erreicht, in den zweiten Zustand einzutreten.

3. Detektionsschaltung (100) nach einem der Ansprüche 1-2, wobei die Steuerschaltung (101, 102) dazu ausgelegt ist, in Reaktion auf eine Abnahme des digitalen Codes unter einen ersten Schwellenwert ein Abfallsignal (DROOP) zu erzeugen, das anzeigt, dass die Versorgungsspannung (VCC) unter eine erste Schwellenspannung abgefallen ist, und wobei die Steuerschaltung dazu ausgelegt ist, in Reaktion auf eine Zunahme des digitalen Codes über einen zweiten Schwellenwert ein Überschwingsignal (OVERSHOOT-Signal) zu erzeugen, das anzeigt, dass die Versorgungsspannung über eine zweite Schwellenspannung angestiegen ist.

4. Detektionsschaltung (100) nach einem der Ansprüche 1-3, ferner umfassend:
eine Frequenzteilerschaltung (106), die dazu ausgelegt ist, in Reaktion auf ein Eingangstaktsignal ein frequenzgeteiltes Taktsignal (DVCLK) zu erzeugen, wobei die Frequenzteilerschaltung dazu ausgelegt ist, das frequenzgeteilte Taktsignal einem Eingang der abstimmbaren Verzögerungsschaltung (103) als das Eingangssignal bereitzustellen.

5. Detektionsschaltung (100) nach einem der Ansprüche 1-4, ferner umfassend:
eine Zählerschaltung (105), die dazu ausgelegt ist, einen Binärcode (BINCD) zu erzeugen, der eine Anzahl von Einsen in dem digitalen Code anzeigt, wobei die Steuerschaltung (101, 102) dazu ausgelegt ist, den Binärcode unter Verwendung eines Komparators mit dem Ausrichtungswert zu vergleichen, und wobei die Steuerschaltung dazu ausgelegt ist, die abstimmbare Verzögerungsschaltung (103) in Reaktion darauf, dass der Binärcode den Ausrichtungswert (ALNVAL) erreicht, zu veranlassen, ihre Verzögerungseinstellung konstant zu halten.

6. Detektionsschaltung (100) nach einem der Ansprüche 1-5, wobei die abstimmbare Verzögerungsschaltung (103) eine bidirektionale gefaltete Verzögerungskette umfasst, die einstellbare Verzögerungszellenschaltungen (700) umfasst, und wobei jede der einstellbaren Verzögerungszellenschaltungen eine Datenweiterleitungsschaltung, die zwischen einen ersten Eingang und einen ersten Ausgang der einstellbaren Verzögerungszellenschaltung gekoppelt ist, und eine Datenrückleitungsschaltung umfasst, die zwischen einen zweiten Eingang und einen zweiten Ausgang der einstellbaren Verzögerungszellenschaltung gekoppelt ist.

7. Verfahren zum Überwachen einer Versorgungsspannung (VCC) in einer integrierten Schaltung, wobei das Verfahren Folgendes umfasst:
Erzeugen eines verzögerten Signals (DLY) unter Verwendung einer abstimmbaren Verzögerungsschaltung (103), wobei die abstimmbare Verzögerungsschaltung die Versorgungsspannung empfängt;
Anpassen einer Verzögerung, die durch die abstimmbare Verzögerungsschaltung dem verzögerten Signal bereitgestellt wird, unter Verwendung einer Steuerschaltung (101, 102);
Umwandeln der durch die abstimmbare Verzögerungsschaltung dem verzögerten Signal bereitgestellten Verzögerung unter Verwendung einer Zeit-Digital-Wandlerschaltung (104) in einen digitalen Code, wobei die Zeit-Digital-Wandlerschaltung (104) auch die Versorgungsspannung (VCC) empfängt und wobei die Zeit-Digital-Wandlerschaltung (104) den Wert des digitalen Codes proportional zu Änderungen der Versorgungsspannung (VCC) ändert;
Veranlassen, dass die abstimmbare Verzögerungsschaltung in Reaktion darauf, dass ein Wert des digitalen Codes einen Ausrichtungswert (ALNVAL) erreicht, ihre Verzögerungseinstellung konstant hält; und
Detektieren von Änderungen der Versorgungsspannung, während die Verzögerungseinstellung der abstimmbaren Verzögerungsschaltung konstant gehalten wird, basierend auf Änderungen des digitalen Codes.

8. Verfahren nach Anspruch 7, ferner umfassend:
Erzeugen eines Überschwingsignals (OVERSHOOT-Signals), das anzeigt, dass die Versorgungsspannung (VCC) über eine obere Schwellenspannung angestiegen ist, in Reaktion auf eine Zunahme des digitalen Codes über einen oberen Schwellenwert unter Verwendung der Steuerschaltung (101, 102); und
Erzeugen eines Abfallsignals (DROOP), das anzeigt, dass die Versorgungsspannung unter eine untere Schwellenspannung abgefallen ist, in Reaktion auf eine Abnahme des digitalen Codes unter einen unteren Schwellenwert unter Verwendung der Steuerschaltung.

9. Verfahren nach einem der Ansprüche 7-8, ferner umfassend:
Verarbeiten von Daten, die durch den digitalen Code angezeigt werden, in Echtzeit unter Verwendung von Mustererkennung mit Signalschablonenvergleich, um Muster in den Daten zu identifizieren, die Anomalien in der Versorgungsspannung auf einem Stromnetz in der integrierten Schaltung anzeigen.

10. Verfahren nach einem der Ansprüche 7-9, ferner umfassend:
Umwandeln des digitalen Codes von einem Thermometercode unter Verwendung einer Zählerschaltung (105) in einen Binärcode (BINCD); und
Vergleichen des Binärcodes mit dem Ausrichtungswert (ALNVAL) unter Verwendung der Steuerschaltung (101, 102), wobei das Veranlassen der abstimmbaren Verzögerungsschaltung (103), ihre Verzögerungseinstellung konstant zu halten, ferner Veranlassen der abstimmbaren Verzögerungsschaltung, ihre Verzögerungseinstellung konstant zu halten, in Reaktion darauf umfasst, dass der Binärcode den Ausrichtungswert erreicht.

11. Verfahren nach einem der Ansprüche 7-10, ferner umfassend:
Erzeugen eines frequenzgeteilten Taktsignals (DVCLK) in Reaktion auf ein Eingangstaktsignal unter Verwendung einer Frequenzteilerschaltung (106); und
Bereitstellen des frequenzgeteilten Taktsignals an einen Eingang der abstimmbaren Verzögerungsschaltung (103), wobei das Erzeugen des verzögerten Signals (DLY) unter Verwendung der abstimmbaren Verzögerungsschaltung Verzögern von Impulsen in dem frequenzgeteilten Taktsignal umfasst, um das verzögerte Signal unter Verwendung der abstimmbaren Verzögerungsschaltung zu erzeugen.

## Revendications

1. Circuit de détection (100) comprenant :
un circuit à retard accordable (103) configuré pour générer un signal retardé (DLY) en réponse à un signal d'entrée, où le circuit à retard accordable est configuré pour recevoir une tension d'alimentation (VCC) ;
un circuit de commande (101, 102) configuré pour ajuster un retard fourni par le circuit à retard accordable au signal retardé par rapport au signal d'entrée ; et
un circuit convertisseur temps-numérique (104) configuré pour convertir le retard fourni par le circuit à retard accordable au signal retardé en un code numérique,
où le circuit convertisseur temps-numérique (104) est également configuré pour recevoir la tension d'alimentation (VCC),
où le circuit convertisseur temps-numérique (104) est configuré pour modifier la valeur du code numérique proportionnellement aux variations de la tension d'alimentation (VCC),
où le circuit de commande est configuré pour amener le circuit à retard accordable à maintenir son réglage de retard constant en réponse à une valeur du code numérique atteignant une valeur d'alignement (ALNVAL), et
où le circuit de commande est configuré pour détecter les variations de la tension d'alimentation, tandis que le réglage de retard du circuit à retard accordable est maintenu constant, sur la base des variations du code numérique.

2. Circuit de détection (100) selon la revendication 1, dans lequel le circuit de commande (101, 102) comprend en outre :
un circuit de contrôleur de machine à états finis (101) configuré pour fournir une sortie de commande indicative d'un état d'une machine à états finis en réponse au code numérique ;
un circuit de configuration de retard (102) configuré pour amener le circuit à retard accordable (103) à ajuster le retard fourni au signal retardé en réponse à la sortie de commande indiquant un premier état de la machine à états finis,
où le circuit de configuration de retard est configuré pour amener le circuit à retard accordable à maintenir son réglage de retard constant en réponse à la sortie de commande indiquant un deuxième état de la machine à états finis, et où la machine à états finis est configurée pour entrer dans le deuxième état en réponse au code numérique atteignant la valeur d'alignement (ALNVAL).

3. Circuit de détection (100) selon l'une quelconque des revendications 1 et 2, dans lequel le circuit de commande (101, 102) est configuré pour générer un signal de chute (DROOP) indiquant que la tension d'alimentation (VCC) a diminué en dessous d'une première tension de seuil en réponse à une diminution du code numérique en dessous d'une première valeur de seuil, et où le circuit de commande est configuré pour générer un signal de dépassement (OVERSHOOT) indiquant que la tension d'alimentation a augmenté au-dessus d'une deuxième tension de seuil en réponse à une augmentation du code numérique au-dessus d'une deuxième valeur de seuil.

4. Circuit de détection (100) selon l'une quelconque des revendications 1 à 3, comprenant en outre :
un circuit diviseur de fréquence (106) configuré pour générer un signal d'horloge divisé en fréquence (DVCLK) en réponse à un signal d'horloge d'entrée, où le circuit diviseur de fréquence est configuré pour fournir le signal d'horloge divisé en fréquence à une entrée du circuit à retard accordable (103) en tant que signal d'entrée.

5. Circuit de détection (100) selon l'une quelconque des revendications 1 à 4, comprenant en outre :
un circuit de comptage (105) configuré pour générer un code binaire (BINCD) indicatif d'un nombre de uns dans le code numérique, où le circuit de commande (101, 102) est configuré pour comparer le code binaire à la valeur d'alignement à l'aide d'un comparateur, et où le circuit de commande est configuré pour amener le circuit à retard accordable (103) à maintenir son réglage de retard constant en réponse au code binaire atteignant la valeur d'alignement (ALNVAL).

6. Circuit de détection (100) selon l'une quelconque des revendications 1 à 5, dans lequel le circuit à retard accordable (103) comprend une chaîne à retard repliée bidirectionnelle comprenant des circuits à cellules à retard accordables (700), et où chacun des circuits à cellules à retard accordables comprend un circuit de transmission de données couplé entre une première entrée et une première sortie du circuit à cellules à retard accordables et un circuit de retour de données couplé entre une deuxième entrée et une deuxième sortie du circuit à cellules à retard accordables.

7. Procédé de surveillance d'une tension d'alimentation (VCC) dans un circuit intégré, le procédé comprenant les étapes suivantes :
générer un signal retardé (DLY) à l'aide d'un circuit à retard accordable (103), où le circuit à retard accordable reçoit la tension d'alimentation ;
ajuster un retard fourni par le circuit à retard accordable au signal retardé à l'aide d'un circuit de commande (101, 102) ;
convertir le retard fourni par le circuit à retard accordable au signal retardé en un code numérique à l'aide d'un circuit convertisseur temps-numérique (104), où le circuit convertisseur temps-numérique (104) reçoit également la tension d'alimentation (VCC), et où le circuit convertisseur temps-numérique (104) modifie la valeur du code numérique proportionnellement aux variations de la tension d'alimentation (VCC) ;
amener le circuit à retard accordable à maintenir son réglage de retard constant en réponse à une valeur du code numérique atteignant une valeur d'alignement (ALNVAL) ; et
détecter des variations de la tension d'alimentation, tout en maintenant ledit réglage de retard du circuit à retard accordable constant, sur la base des variations du code numérique.

8. Procédé selon la revendication 7 comprenant en outre les étapes suivantes :
générer un signal de dépassement (OVERSHOOT) indiquant que la tension d'alimentation (VCC) a augmenté au-dessus d'une tension de seuil supérieure en réponse à une augmentation du code numérique au-dessus d'une valeur de seuil supérieure à l'aide du circuit de commande (101, 102) ; et
générer un signal de chute (DROOP) indiquant que la tension d'alimentation est descendue en dessous d'une tension de seuil inférieure en réponse à une diminution du code numérique en dessous d'une valeur de seuil inférieure à l'aide du circuit de commande.

9. Procédé selon l'une quelconque des revendications 7 et 8, comprenant en outre l'étape suivante :
traiter en temps réel les données indiquées par le code numérique à l'aide d'une reconnaissance de formes avec mise en correspondance de modèles de signaux afin d'identifier des formes dans les données qui indiquent des anomalies dans la tension d'alimentation d'un réseau électrique du circuit intégré.

10. Procédé selon l'une quelconque des revendications 7 et 9, comprenant en outre les étapes suivantes :
convertir le code numérique d'un code thermométrique en un code binaire (BINCD) à l'aide d'un circuit de comptage (105) ; et
comparer le code binaire à la valeur d'alignement (ALNVAL) à l'aide du circuit de commande (101, 102), où le fait de faire en sorte que le circuit à retard accordable (103) maintienne son réglage de retard constant comprend en outre le fait de faire en sorte que le circuit à retard accordable maintienne son réglage de retard constant en réponse au code binaire atteignant la valeur d'alignement.

11. Procédé selon l'une quelconque des revendications 7 et 10, comprenant en outre les étapes suivantes :
générer un signal d'horloge divisé en fréquence (DVCLK) en réponse à un signal d'horloge d'entrée à l'aide d'un circuit diviseur de fréquence (106) ; et
fournir le signal d'horloge divisé en fréquence à une entrée du circuit à retard accordable (103), où la génération du signal retardé (DLY) à l'aide du circuit à retard accordable comprend de retarder des impulsions dans le signal d'horloge divisé en fréquence afin de générer le signal retardé à l'aide du circuit à retard accordable.
